# EUROPEAN PATENT APPLICATION

(11) **EP 4 387 201 A1**
(43) Date of publication of application: **19.06.2024**
(21) Application number: 22866197.1
(22) Date of filing: 20.06.2022
(51) Int. Cl.: H04L 67/025, G06F 9/54

(54) **RDMA DATA TRANSMISSION SYSTEM, RDMA DATA TRANSMISSION METHOD, AND NETWORK DEVICE**

(30) Priority: 07.09.2021 CN 202111045146
(71) Applicant: Huawei Technologies Co., Ltd., Shenzhen, Guangdong 518129 (CN)
(72) Inventor: QU, Huichun, Shenzhen, Guangdong 518129 (CN); QIU, Jun, Shenzhen, Guangdong 518129 (CN); WU, Xueping, Shenzhen, Guangdong 518129 (CN); ZHANG, Jinbin, Shenzhen, Guangdong 518129 (CN); WU, Pei, Shenzhen, Guangdong 518129 (CN)
(74) Representative: Pfenning, Meinig & Partner mbB
(86) International application number: PCT/CN2022/099788
(87) International publication number: WO 2023/035722

(57) **Abstract**

Embodiments of this application disclose an RDMA data transmission system, an RDMA data transmission method, and a network device, for example, may be applied to a network device such as a smart network interface card (Smart NIC) or a data processing unit (DPU), and may be applied to RoCEv1, RoCEv2, and another new RDMA scenario. The RDMA data transmission system may include a first network device in a first host and a second network device in a second host. The first network device may create an SSQ used by a plurality of processes run by the first host, obtain an RDMA data transmission message of a first process from the SSQ, and encapsulate a first identifier corresponding to the first process into a first packet in which the RDMA data transmission message is encapsulated. The second network device also encapsulates the first identifier into a second packet in which a feedback message is encapsulated. In this way, after receiving the second packet, the first network device may efficiently notify, based on the first identifier in the second packet, the first process that the RDMA data transmission message has been processed, thereby helping improve running efficiency of the first process.

## Description

This application claims priority to Chinese Patent Application No. 202111045146.4, filed with the China National Intellectual Property Administration on September 7, 2021 and entitled "RDMA DATA TRANSMISSION SYSTEM, RDMA DATA TRANSMISSION METHOD, AND NETWORK DEVICE", which is incorporated herein by reference in its entirety.

### TECHNICAL FIELD

This application relates to the field of communication technologies, and in particular, to an RDMA data transmission system, an RDMA data transmission method, and a network device.

### BACKGROUND

Remote direct memory access (remote direct memory access, RDMA) is a technology in which a CPU core of a remote host is bypassed to access data in a memory of a CPU. Without passing through the CPU core, the remote direct memory access saves a large quantity of CPU core resources, improves a system throughput and shortens a network communication delay of a system and especially, is widely applied to large-scale parallel computer clusters.

When an application process on a local host executes an RDMA data transmission message, a network interface card of the local host reads the RDMA data transmission message from a send queue in a memory of the host or the network interface card to a buffer of the network interface card, and then sends the RDMA data transmission message to a network interface card of a peer host by using a network. Then, the network interface card of the peer host sends feedback information to the network interface card of the local host, and the network interface card of the local host notifies, based on the feedback information, the application process that the RDMA data transmission message has been processed completely.

However, when the send queue of the network adapter of the local host is shared by a plurality of application processes, the feedback information cannot be quickly used to notify the corresponding application process of a completion status of the RDMA data transmission message.

### SUMMARY

Embodiments of this application provide a data transmission system, a data transmission method, and a network device, to quickly notify a corresponding application process of a completion status of an RDMA data transmission message.

To resolve the foregoing technical problem, embodiments of this application provide the following technical solutions.

The first network device may create a shared send queue used by a plurality of processes that are run by a first host. The first network device may obtain an RDMA data transmission message of a first process from the shared send queue, encapsulate a first identifier corresponding to the first process into a packet (referred to as a first packet) in which the RDMA data transmission message is encapsulated, and send the first packet to a second network device in an RDMA manner. After receiving the first packet, the second network device may encapsulate a first identifier into a packet (referred to as a second packet) in which a feedback message is encapsulated, and then send the second packet to the first network device in an RDMA manner. In this way, after receiving the second packet, the first network device does not need to determine, based on a context of the shared send queue, that the feedback message in the second packet corresponds to the first process, but may determine, based on the first identifier in the second packet, that the feedback message corresponds to the first process. This helps efficiently notify the first process that the RDMA data transmission message has been processed, thereby improving running efficiency of the first process.

Optionally, the first packet is obtained by the first network device through encapsulation according to an RDMA protocol, and the second packet is obtained by the second network device through encapsulation according to the RDMA protocol. The RDMA protocol may be, for example, a wireless bandwidth (infiniband) protocol, an RDMA (RDMA over Converged Ethernet version 1, RoCE1) protocol using an aggregated Ethernet version 1, an RDMA (RDMA over Converged Ethernet version 2, RoCE2) protocol using an aggregated Ethernet version 2, or an internet wide area RDMA protocol (internet wide area RDMA protocol, iWARP).

Optionally, the first network device may send the first packet to the second network device through a transmission channel bound to the shared send queue. The transmission channel is used to implement a network connection between the first network device and the second network device, and the transmission channel may be, for example, an input/output channel (channel-IO).

Optionally, after receiving the first packet through the transmission channel, the second network device may further send the second packet to the second network device through the transmission channel.

Optionally, the first network device may receive the second packet from the second network device through the transmission channel.

Optionally, the first packet and the second packet further include a second identifier, the second identifier is used to determine the RDMA data transmission message from a plurality of RDMA data transmission messages of the first process; and the first network device is specifically configured to notify the first process of the completion status of the RDMA data transmission message based on the first identifier, the feedback message, and the second identifier. The second identifier is included in the first packet and the second packet, which helps the first network device efficiently and accurately notify the first process of the completion status of the RDMA data transmission message.

Optionally, the shared send queue is specifically configured to store work requests from the plurality of processes, the first network device is specifically configured to: obtain a first work request from the first process from the shared send queue, and obtain the RDMA data transmission message based on the first work request, and the first work request describes the RDMA data transmission message.

Optionally, the shared send queue may be set in a memory of the first network device. Alternatively, optionally, the shared send queue may be set in a memory of the first host.

Compared with that the first identifier is determined by reading the first work request from the shared send queue based on the context of the shared send queue, in this embodiment of this application, the first identifier is obtained by using the second packet, which helps avoid reading the work request from the shared send queue as much as possible, save a cache resource of the first network device, and shorten a delay in a process of completing the work request.

Optionally, the first network device is specifically configured to: determine, from a plurality of completion queues based on the first identifier, a first completion queue corresponding to the first process, and write a work completion element into the first completion queue based on the feedback message, where the work completion element describes the completion status of the RDMA data transmission message.

The first identifier may be used to determine the first completion queue. In this embodiment of this application, the first completion queue may be efficiently and accurately determined by using the first identifier included in the first packet and the second packet. This helps efficiently and accurately notify the first process that the RDMA data transmission message has been processed, thereby improving running efficiency of the first process.

According to a second aspect, an embodiment of this application provides an RDMA data transmission method, including: A first network device obtains an RDMA data transmission message of a first process from a shared send queue, where the first network device is disposed on a first host, and the first process is any one of a plurality of processes that use the shared send queue and that are run by the first host. The first network device sends a first packet to a second network device, where the second network device is disposed on a second host, and the first packet includes the RDMA data transmission message and a first identifier corresponding to the first process. The first network device receives a second packet from the second network device, where the second packet includes the first identifier and a feedback message, and the feedback message indicates a completion status of the RDMA data transmission message. The first network device notifies the first process of the completion status of the RDMA data transmission message based on the first identifier and the feedback message in the second packet.

Optionally, the first packet is obtained by the first network device through encapsulation according to an RDMA protocol, and the second packet is obtained by the second network device through encapsulation according to the RDMA protocol. The RDMA protocol may be, for example, a wireless bandwidth (infiniband) protocol, an RDMA (RDMA over Converged Ethernet version 1, RoCE1) protocol using an aggregated Ethernet version 1, an RDMA (RDMA over Converged Ethernet version 2, RoCE2) protocol using an aggregated Ethernet version 2, or an internet wide area RDMA protocol (internet wide area RDMA protocol, iWARP).

Optionally, the first network device may send the first packet to the second network device through a transmission channel bound to the shared send queue. The transmission channel is used to implement a network connection between the first network device and the second network device, and the transmission channel may be, for example, an input/output channel (channel-IO).

Optionally, the first network device may receive the second packet from the second network device through the transmission channel.

The first network device includes the first identifier in the first packet, which helps indicate the second network device to include the first identifier in the second packet. In this way, after receiving the second packet, the first network device does not need to determine, based on a context of the shared send queue, that the feedback message in the second packet corresponds to the first process, but may determine, based on the first identifier in the second packet, that the feedback message corresponds to the first process. This helps efficiently notify the first process that the RDMA data transmission message has been processed, thereby improving running efficiency of the first process.

Optionally, the first packet and the second packet further include a second identifier, and the second identifier is used to determine the RDMA data transmission message from a plurality of RDMA data transmission messages of the first process. That the first network device notifies the first process of a completion status of the RDMA data transmission message based on the first identifier and the feedback message in the second packet includes: The first network device is specifically configured to notify the first process of the completion status of the RDMA data transmission message based on the first identifier, the feedback message, and the second identifier.

The first network device includes the second identifier in the first packet, which helps indicate the second network device to include the second identifier in the second packet, and further helps the first network device efficiently and accurately notify the first process of the completion status of the RDMA data transmission message based on the second identifier in the second packet.

Optionally, the shared send queue is specifically configured to store work requests from the plurality of processes. That a first network device obtains an RDMA data transmission message of a first process from a shared send queue includes: The first network device obtains a first work request from the first process from the shared send queue, where the first work request describes the RDMA data transmission message; and the first network device obtains the RDMA data transmission message based on the first working request.

Optionally, the shared send queue may be set in a memory of the first network device. Alternatively, optionally, the shared send queue may be set in a memory of the first host.

Compared with that the first identifier is determined by reading the first work request from the shared send queue based on the context of the shared send queue, in this embodiment of this application, the first network device includes the first identifier in the first packet, to indicate the second network device to include the first identifier in the second packet. In this way, after receiving the second packet, the first network device obtains the first identifier by using the second packet. This helps avoid reading the work request from the shared send queue as much as possible, save a cache resource of the first network device, and shorten a delay in a process of completing the work request.

Optionally, that the first network device notifies the first process of a completion status of the RDMA data transmission message based on the first identifier and the feedback message in the second packet includes: The first network device determines, from a plurality of completion queues based on the first identifier, a first completion queue corresponding to the first process; and the first network device writes a work completion element into the first completion queue based on the feedback message, where the work completion element is used to notify the first process of the completion status of the RDMA data transmission message.

The first identifier may be used to determine the first completion queue. In this embodiment of this application, the first network device includes the first identifier in the first packet, which helps indicate the second network device to include the first identifier in the second packet. In this way, after receiving the second packet, the first network device can efficiently and accurately determine the first completion queue by using the first identifier included in the second packet, to efficiently and accurately notify the first process that the RDMA data transmission message has been processed, thereby improving running efficiency of the first process.

According to a third aspect, an embodiment of this application provides an RDMA data transmission method, including: A second network device receives a first packet from a first network device, where the first network device is disposed on a first host, the second network device is disposed on a second host, the first packet includes an RDMA data transmission message of a first process and a first identifier corresponding to the first process, the RDMA data transmission message is obtained by the first network device from a shared send queue, and the first process is any one of a plurality of processes that are run on the first host and that use the shared send queue. The second network device sends a second packet to the first network device based on the first packet, where the second packet includes the first identifier and a feedback message, and the first identifier and the feedback message indicate the first network device to notify the first process of a completion status of the RDMA data transmission message.

After obtaining the first identifier in the first packet through parsing, the second network device may include the first identifier in the second packet. In this way, after receiving the second packet, the first network device does not need to determine, based on a context of the shared send queue, that the feedback message in the second packet corresponds to the first process, but may determine, based on the first identifier in the second packet, that the feedback message corresponds to the first process. This helps efficiently notify the first process that the RDMA data transmission message has been processed, thereby improving running efficiency of the first process.

Optionally, the first packet is obtained by the first network device through encapsulation according to an RDMA protocol, and the second packet is obtained by the second network device through encapsulation according to the RDMA protocol. The RDMA protocol may be, for example, a wireless bandwidth (infiniband) protocol, an RDMA (RDMA over Converged Ethernet version 1, RoCE1) protocol using an aggregated Ethernet version 1, an RDMA (RDMA over Converged Ethernet version 2, RoCE2) protocol using an aggregated Ethernet version 2, or an internet wide area RDMA protocol (internet wide area RDMA protocol, iWARP).

Optionally, the first packet is sent by the first network device to the second network device through a transmission channel bound to the shared send queue. The transmission channel is used to implement a network connection between the first network device and the second network device, and the transmission channel may be, for example, an input/output channel (channel-IO).

Optionally, after receiving the first packet through the transmission channel, the second network device may further send the second packet to the second network device through the transmission channel.

Optionally, the first packet and the second packet further include a second identifier, the second identifier is used to determine the RDMA data transmission message from a plurality of RDMA data transmission messages of the first process, and the first identifier, the feedback message, and the second identifier indicate the first network device to notify the first process of the completion status of the RDMA data transmission message.

After obtaining the second identifier in the first packet through parsing, the second network device may include the second identifier in the second packet. In this way, after receiving the second packet, the first network device includes the second identifier in the second packet, which helps the first network device efficiently and accurately notify the first process of the completion status of the RDMA data transmission message.

According to a fourth aspect, an embodiment of this application provides a network device, including: an obtaining unit, configured to obtain an RDMA data transmission message of a first process from a shared send queue, where the network device is disposed on a first host, and the first process is any one of a plurality of processes that are run on the first host and that use the shared send queue; a sending unit, configured to send a first packet to a second network device, where the second network device is disposed on a second host, and the first packet includes the RDMA data transmission message and a first identifier corresponding to the first process; a receiving unit, configured to receive a second packet from the second network device, where the second packet includes the first identifier and a feedback message, and the feedback message indicates a completion status of the RDMA data transmission message; and a completion unit, configured to notify the first process of the completion status of the RDMA data transmission message based on the first identifier and the feedback message in the second packet.

Optionally, the first packet is obtained by the first network device through encapsulation according to an RDMA protocol, and the second packet is obtained by the second network device through encapsulation according to the RDMA protocol. The RDMA protocol may be, for example, a wireless bandwidth (infiniband) protocol, an RDMA (RDMA over Converged Ethernet version 1, RoCE1) protocol using an aggregated Ethernet version 1, an RDMA (RDMA over Converged Ethernet version 2, RoCE2) protocol using an aggregated Ethernet version 2, or an internet wide area RDMA protocol (internet wide area RDMA protocol, iWARP).

Optionally, the sending unit may send the first packet to the second network device through a transmission channel bound to the shared send queue. The transmission channel is used to implement a network connection between the first network device and the second network device, and the transmission channel may be, for example, an input/output channel (channel-IO).

Optionally, the receiving unit may receive the second packet through the transmission channel.

Optionally, the first packet and the second packet further include a second identifier, the second identifier is used to determine the RDMA data transmission message from a plurality of RDMA data transmission messages of the first process; and the completion unit is specifically configured to notify the first process of the completion status of the RDMA data transmission message based on the first identifier, the feedback message, and the second identifier.

Optionally, the shared send queue is specifically configured to store work requests from the plurality of processes. The obtaining unit is specifically configured to: obtain a first work request from the first process from the shared send queue, where the first work request describes the RDMA data transmission message; and obtain the RDMA data transmission message based on the first working request.

Optionally, the completion unit is specifically configured to: determine, from a plurality of completion queues based on the first identifier, a first completion queue corresponding to the first process; and write a work completion element into the first completion queue based on the feedback message, where the work completion element is used to notify the first process of the completion status of the RDMA data transmission message.

According to a fifth aspect, an embodiment of this application provides a network device, including: a receiving unit, configured to receive a first packet from a first network device, where the first network device is disposed on a first host, the network device is disposed on a second host, the first packet includes an RDMA data transmission message of a first process and a first identifier corresponding to the first process, the RDMA data transmission message is obtained by the first network device from a shared send queue, and the first process is any one of a plurality of processes that are run on the first host and that use the shared send queue; and a sending unit, configured to send a second packet to the first network device based on the first packet, where the second packet includes the first identifier and a feedback message, and the first identifier and the feedback message indicate the first network device to notify the first process of a completion status of the RDMA data transmission message.

Optionally, the first packet is obtained by the first network device through encapsulation according to an RDMA protocol, and the second packet is obtained by the second network device through encapsulation according to the RDMA protocol. The RDMA protocol may be, for example, a wireless bandwidth (infiniband) protocol, an RDMA (RDMA over Converged Ethernet version 1, RoCE1) protocol using an aggregated Ethernet version 1, an RDMA (RDMA over Converged Ethernet version 2, RoCE2) protocol using an aggregated Ethernet version 2, or an internet wide area RDMA protocol (internet wide area RDMA protocol, iWARP).

Optionally, the first packet may be sent by the first network device to the second network device through a transmission channel bound to the shared send queue. The transmission channel is used to implement a network connection between the first network device and the second network device, and the transmission channel may be, for example, an input/output channel (channel-IO).

Optionally, the receiving unit may receive the first packet through the transmission channel.

Optionally, the sending unit may send the second packet to the second network device through the transmission channel.

Optionally, the first packet and the second packet further include a second identifier, the second identifier is used to determine the RDMA data transmission message from a plurality of RDMA data transmission messages of the first process, and the first identifier, the feedback message, and the second identifier indicate the first network device to notify the first process of the completion status of the RDMA data transmission message.

According to a sixth aspect, this application provides a computing device, where the computing device includes a processor and a memory, the processor is coupled to the memory, the memory is configured to store program code, and when executing the program code stored in the memory, the processor can perform the method described in any one of the second aspect or the possible implementations of the second aspect or any one of the third aspect or the possible implementations of the third aspect.

In a possible implementation, the computing device may further include a communication interface, and the processor can receive or send a packet through the communication interface.

A seventh aspect of this application provides a chip system, where the chip system includes a processor and an interface circuit, the processor is coupled to a memory by using the interface circuit, and the processor is configured to execute program code in the memory, to perform the method described in any one of the second aspect or the possible implementations of the second aspect or the third aspect or the possible implementations of the third aspect. The chip system may include a chip, or may include a chip and another discrete component.

An eighth aspect of this application provides a computer-readable storage medium. The computer-readable storage medium stores program code. When the program code is run on a computer device, the computer device performs the method described in any one of the second aspect or the possible implementations of the second aspect or the third aspect or the possible implementations of the third aspect in this application.

A ninth aspect of this application provides a computer program product. When program code included in the computer program product is executed by a computer device, the computer device performs the method described in any one of the second aspect or the possible implementations of the second aspect or the third aspect or the possible implementations of the third aspect.

Because apparatuses provided in this application may be configured to perform the foregoing corresponding methods, for technical effects that can be obtained by the apparatuses in this application, refer to the technical effects obtained by the foregoing corresponding methods. Details are not described herein again.

### BRIEF DESCRIPTION OF DRAWINGS

FIG. 1A, FIG. 1B, and FIG. 1C each show a possible application scenario according to an embodiment of this application;
FIG. 2A and FIG. 2B separately show a possible structure of a computer system;
FIG. 3 shows another possible structure of a computer system according to an embodiment of this application;
FIG. 4 shows a possible structure of a first work request;
FIG. 5A and FIG. 5B separately show a process of processing an RDMA data transmission message by a first network device;
FIG. 6A shows a transmission process of a first packet and a second packet that correspond to a send operation;
FIG. 6B shows a transmission process of a first packet and a second packet corresponding to a write operation;
FIG. 6C shows a transmission process of a first packet and a second packet corresponding to an atomic operation;
FIG. 6D shows a transmission process of a first packet and a second packet corresponding to a read operation;
FIG. 7 shows a possible procedure of an RDMA data transmission method according to an embodiment of this application;
FIG. 8 shows a possible structure of a network device according to an embodiment of this application; and
FIG. 9 shows a possible structure of a network device according to an embodiment of this application.

### DESCRIPTION OF EMBODIMENTS

The following first describes an example of an application scenario in embodiments of this application.

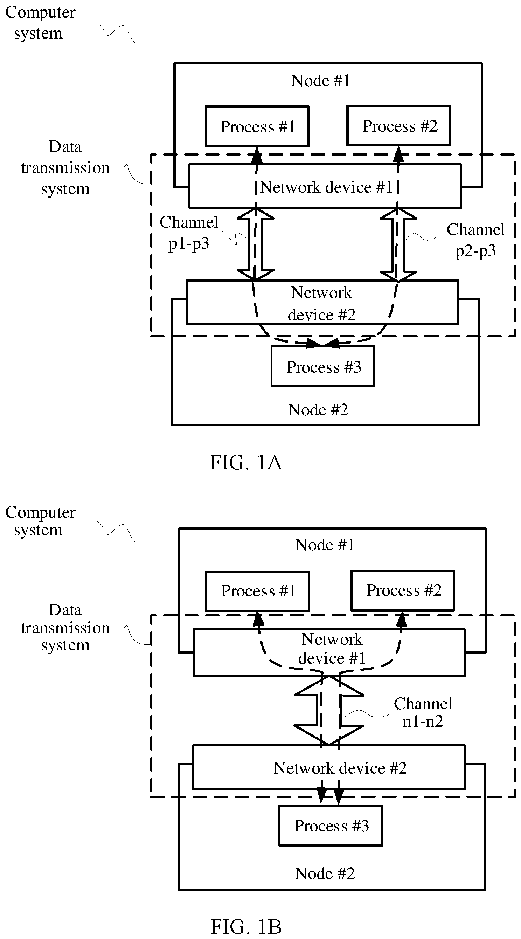

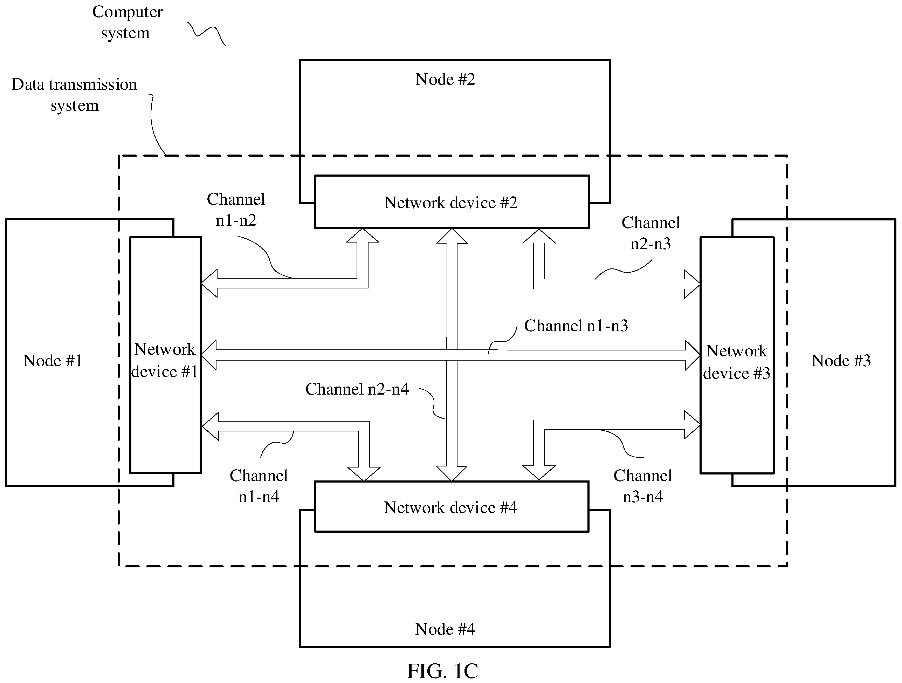

FIG. 1A is a possible application scenario according to an embodiment of this application. The computer system shown in FIG. 1Aincludes at least a node #1 and a node #2. The node #1 or the node #2 may be any device that is connected to one or more links of a communication network and forms an origin and/or a destination of a data transmission message (message for short) within the communication network. One or more application processes (processes for short) may run on the node #1 or the node #2. In FIG. 1A, an example in which the node #1 runs a process #1 and a process #2 is used, and an example in which the node #2 runs a process #3 is used. It may be understood that the node #1 or the node #2 may run more or fewer processes. The node #1 is used as an example. A message sent by the node #1 may be from the process #1 or the process #2, and a message received by the node #1 may be sent to the process #1 or the process #2.

The node #1 and the node #2 may be communicatively connected by using a data transmission system. The data transmission system shown in FIG. 1A may include at least a network device #1 in the node #1 and a network device #2 in the node #2. Optionally, the network device #1 or the network device #2 may be a network adapter or referred to as a network interface card (network interface card, NIC). Optionally, the data transmission system shown in FIG. 1A may be a remote direct memory access (remote direct memory access, RDMA) system, and a message transmitted in the data transmission system may be an RDMA data transmission message.

In the computer system shown in FIG. 1A, the data transmission system may create a data transmission channel (channel) based on a process running on a node. It is assumed that the process #1 and the process #2 need to separately send messages to the process #3, and the network device #1 and the network device #2 need to separately create data transmission channels for the process #1 and the process #2, which are respectively a channel p1-p3 and a channel p2-p3 shown in FIG. 1A. A message of the process #1 is sent to the process #3 through the channel p1-p3, and a message of the process #2 is sent to the process #3 through the channel p2-p3.

As a quantity of nodes in a computer system increases and a quantity of processes on a node increases, the data transmission system shown in FIG. 1A needs to transmit messages for a large quantity of processes, and correspondingly, a large quantity of data transmission channels need to be created. It is assumed that the computer system shown in FIG. 1A includes n nodes, and each node runs m processes. In this case, for any node, the data transmission system needs to create m*n data transmission channels. Because at least one queue pair (queue pair, QP) needs to be created on a corresponding node for each data transmission channel, and a large quantity of QPs occupy excessive storage resources of the node, creating a data transmission channel based on a process running on the node by the data transmission system affects scalability of the data transmission system.

FIG. 1B shows another possible application scenario according to an embodiment of this application. A computer system shown in FIG. 1B may be understood with reference to the computer system shown in FIG. 1A. However, different from FIG. 1A, in the computer system shown in FIG. 1B, a data transmission system creates a data transmission channel based on a node in the computer system. It is still assumed that the process #1 and the process #2 need to separately send a message to the process #3. In the data transmission system shown in FIG. 1B, the network device #1 and the network device #2 create a data transmission channel, for example, a channel n1-n2 shown in FIG. 1B, for the node #1 and the node #2. The message of the process #1 and the message of the process #2 are both sent to the process #3 through the channel n1-n2.

It is assumed that the computer system shown in FIG. 1B includes n nodes, and each node runs m processes. In this case, for any node, the data transmission system needs to create a maximum of n-1 data transmission channels. Compared with the data transmission system shown in FIG. 1A, reducing a quantity of data transmission channels helps reduce storage resources occupied by a QP. It can be learned that, in the data transmission system, creating a data transmission channel based on a node reduces impact on scalability of the data transmission system.

For example, n is 4. FIG. 1C shows another possible application scenario according to an embodiment of this application. Compared with FIG. 1B, in addition to the node #1 and the node #2, the computer system shown in FIG. 1C further includes a node #3 and a node #4. The data transmission system shown in FIG. 1C creates data transmission channels based on nodes, for example, a channel n1-n2, a channel n1-n3, a channel n1-n4, a channel n2-n3, a channel n2-n4, and a channel n3-n4 shown in FIG. 1C. For any one of the four nodes shown in FIG. 1C, the data transmission system creates three data transmission channels for the node.

The following further describes the computer system shown in FIG. 1B or FIG. 1C by using the node #1 and the node #2 as an example.

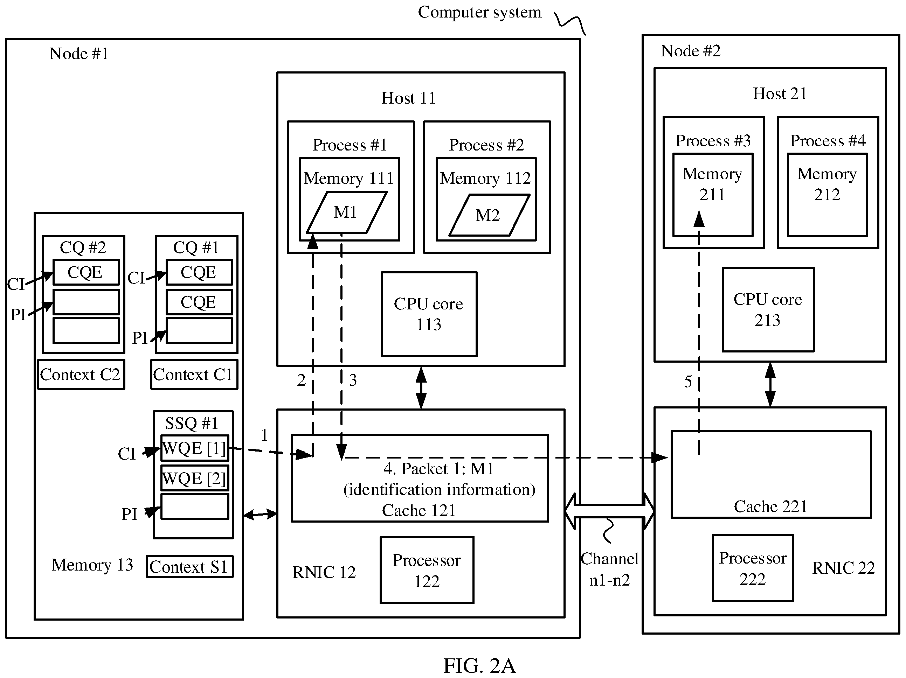

Refer to FIG. 2A. A computer system may include at least a node #1 and a node #2, where the node #1 includes a host 11, a network adapter (network interface card that supports RDMA, RNIC) 12 that supports RMDA, and a memory 13, and the node #2 includes a host 21 and an RNIC 22. The RNIC 22 may be communicatively connected to the host 21, and the RNIC 12 is communicatively connected to the host 11 and the memory 13 separately.

The RNIC 12 in FIG. 2A may be considered as the network device #1 in FIG. 1B or FIG. 1C, or the RNIC 12 and the memory 13 in FIG. 2A may be considered as the network device #1 in FIG. 1B or FIG. 1C. The RNIC 22 in FIG. 2A may be considered as the network device #2 in FIG. 1B or FIG. 1C. In FIG. 2A, an example in which the network device #1 shown in FIG. 1B or FIG. 1C includes the RNIC 12 and the network device includes the RNIC 22 is used. A specific type of the network device #1 or the network device #2 shown in FIG. 1B or FIG. 1C is not limited in this embodiment of this application.

The host 11 or the host 21 may include a processor, a communication interface, and a memory. The processor, the communication interface, and the memory are connected to each other by using an internal bus. The processor may include one or more general-purpose processors, for example, a central processing unit (central processing unit, CPU), or a combination of a CPU and a hardware chip. The memory of the host 11 or the host 21 may store code of a system application and/or an application process, and the processor may execute the code to implement a function of a CPU core 113 and/or a process.

The RNIC 12 may include a processor 122 and a cache 121, and the RNIC 22 may include a processor 222 and a cache 221. The processor 122 or the processor 222 may include one or more general-purpose processors, for example, a CPU, or a combination of a CPU and a hardware chip. The processor 122 and the cache 121 may be connected by using a bus (not shown in FIG. 2A), or may be connected in another manner. The processor 222 and the cache 221 may be connected by using a bus (not shown in FIG. 2A), or may be connected in another manner.

The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof.

The memory or the memory 13 may include a volatile memory (volatile memory), for example, a random access memory (random access memory, RAM). The memory or the memory 13 may also include a non-volatile memory (non-volatile memory), for example, a read-only memory (read-only memory, ROM), a flash memory (flash memory), a hard disk drive (hard disk drive, HDD), a solid-state disk (solid-state drive, SSD), or a double rate synchronous dynamic random access memory (Double Data Rate Synchronous Dynamic Random Access Memory, DDR SDRAM). The memory or the memory 13 may further include a combination of the foregoing types. The DDR SDRAM may be referred to as DDR for short. The cache 121 or the cache 221 may be one level or a plurality of levels of caches, for example, may be implemented by using a register and/or a static random access memory (static random access memory, SRAM).

In a possible implementation, the RNIC 12 and the memory 13 may be integrated on a same chip, or the memory 13 may be a memory in the network device #1 corresponding to the RNIC 12. For example, the memory 13 is DDR. Optionally, the DDR may support a multi-channel technology, and the RNIC 12 may access the memory 13 through a plurality of channels.

Alternatively, in a possible implementation, the memory 13 may be a memory in the host 11. The RNIC 12 may be connected to the host 11 through an input/output (input output, IO) interface, and the IO interface may include but is not limited to an IO structure (fabric) interface such as a peripheral device interconnect express (peripheral component interconnect express, PCIe) interface. If the memory 13 is a memory in the host 11, the RNIC 12 may access the memory 13 through the IO interface between the RNIC 12 and the host 11.

A data transmission channel is created between the RNIC 12 and the RNIC 22. The data transmission channel may be understood as the channel n1-n2 shown in FIG. 1B, FIG. 1C, or FIG. 2A. The RNIC 12 and the RNIC 22 transmit a message between the node 1 and the node 2 through the channel n1-n2. The RNIC 12 may create, in the memory 13, at least one shared send queue (Shard Send Queue, SSQ) of the bound channel n1-n2, and the SSQ may be used to process messages that are from a plurality of processes in the node #1 and that are to be transmitted to the node #2. FIG. 2A shows an example of an SSQ #1 in the at least one SSQ. Optionally, if the at least one SSQ further includes another SSQ (for example, an SSQ #2) other than the SSQ #1, the SSQ #1 and the SSQ #2 may correspond to different priorities, and the RNIC 12 may use a corresponding SSQ based on a priority of a message to be transmitted to the node 2.

The host 11 and/or the host 21 may run one or more processes. FIG. 2A schematically shows two processes (a process #1 and a process #2) running on the host 11 and two processes (a process #3 and a process #4) running on the host 21. A message to be transmitted by the RNIC 12 to the node 2 may come from the process #1 and/or the process #2.

It is assumed that the process #1 and the process #2 need to send a message to the host 21, and the process #1 and the process #2 may separately submit a corresponding work request (work request, WR) to the RNIC 12. For ease of differentiation, in this embodiment of this application, a message to be sent in the process #1 is referred to as a M1, a message to be sent in the process #2 is referred to as a M2, a WR corresponding to the M1 is referred to as a WR 1, and a WR corresponding to the M2 is referred to as a WR 2. For example, the process #1 and the process #2 may separately invoke a program interface in the host 11 and a driver of the RNIC 12 to submit the WR 1 and the WR 2 to the RNIC 12. In a possible implementation, the M1 and the M2 may be RDMA messages.

Because both the M1 and the M2 are used to be sent the WR 1 and the WR 2 to the node 2, after receiving the WR 1 and the WR 2, the RNIC 12 may separately write the WR 1 and the WR 2 into the SSQ #1. In this embodiment of this application, the WR 1 and the WR 2 written into the SSQ #1 are respectively referred to as a work queue element (work queue element, WQE) 1 and a WQE 2. The WQE 1 and the WQE 2 respectively describe the M1 and the M2. For example, the WQE 1 includes a storage address 1 of the M1 in a memory 111, and the WQE 2 includes a storage address 2 of the M2 in the memory 13.

In a possible implementation, the memory 13 further includes a context (context S 1 for short) of the SSQ #1, and the context S1 records usage information of the SSQ #1. For example, the context S1 may include a write index of the SSQ #1 (a PI of the SSQ #1 for short) and a read index (a CI of the SSQ #1 for short). The RNIC 12 may determine a write location of a WQE in the SSQ #1 based on a value of the PI of the SSQ #1, and determine a read location of the WQE in the SSQ #1 based on a value of the CI of the SSQ #1.

FIG. 2A shows an example of three storage locations for placing WQEs in the SSQ #1. The SSQ #1 may further include more or fewer WQEs. In addition, for ease of understanding, the three storage locations for storing the WQEs in the SSQ #1 are drawn as three rectangles sequentially arranged from top to bottom in FIG. 2A. In this embodiment of this application, the three storage locations that are used to store the WQEs and that are in the SSQ #1 shown in FIG. 2A are respectively referred to as a storage location T, a storage location M, and a storage location B from top to bottom. A storage manner of each WQE in the SSQ #1 is not limited in this embodiment of this application. For example, the SSQ #1 may correspond to continuous storage space in the memory 13, or may correspond to discrete storage space in the memory 13.

For example, after receiving the WR 1, the RNIC 12 may point to the storage location T of the SSQ #1 based on the PI of the SSQ #1 in the context S1, and then may write the WQE 1 into the storage location T, and update the value of the PI of the SSQ #1, so that the PI points to the storage location M of the SSQ #1. After receiving the WR 2, the RNIC 12 may write the WQE 2 into the storage location M based on the value of the PI of the SSQ #1 in the context S1, and update the value of the PI of the SSQ #1, so that the value of the PI points to the storage location B of the SSQ #1.

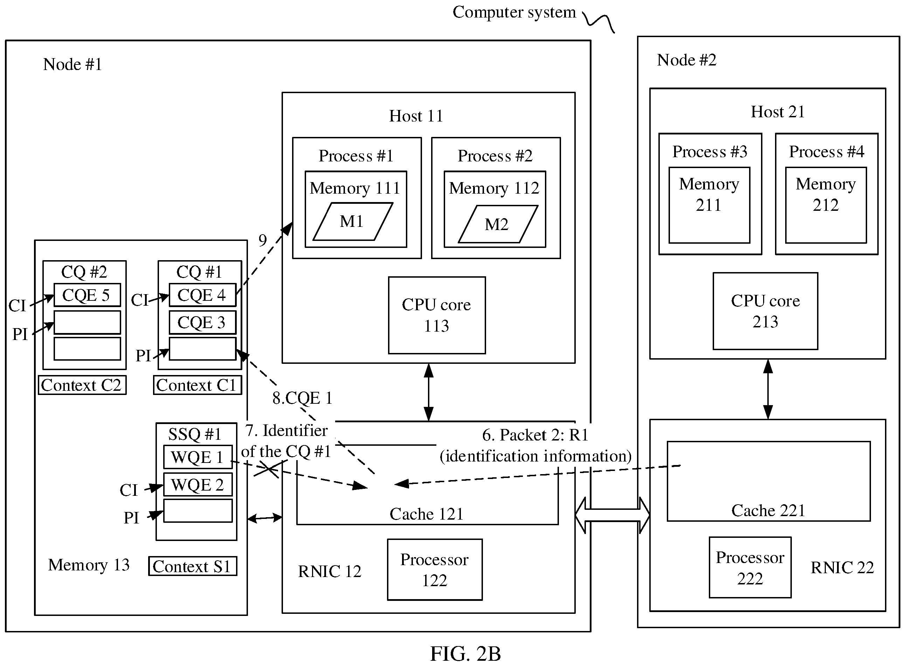

FIG. 2A shows storage locations, to which the CI and the PI point, in the memory 13 after the RNIC 12 writes the WQE 1 and the WQE 2 into the SSQ #1. In a possible implementation, the SSQ #1 is configured to sequentially process the WQEs written into the SSQ #1. Assuming that the WQE 1 is written into the SSQ #1 before the WQE 2, the value of the CI of the SSQ #1 may first point to the WQE 1. After the RNIC 12 processes the WQE 1, the value of the CI of the SSQ #1 is updated to point to the WQE 2 (refer to FIG. 2B), so that the RNIC 12 continues to process the WQE 2.

The following describes, with reference to a dashed line that represents a data transmission process and a sequence number of the dashed line in FIG. 2A, a process in which M1 is sent to the host 21 provided in this embodiment of this application.

Step 1: The RNIC 12 reads the WQE 1 in the SSQ #1 into the cache 121.

For example, the RNIC 12 may determine the value of the CI of the SSQ #1 based on the context S 1, determine, based on the value of the CI, that the CI points to the storage location T in the SSQ #1, and extract the WQE (namely, the WQE 1) from the storage location T.

Step 2: The RNIC 12 accesses a storage location 1 indicated by the WQE 1 in the memory 111.

The WQE 1 may include a storage address 1 of the M1 in the memory 111. After reading the WQE 1 into the cache 121, the RNIC 12 may obtain the storage address 1 through parsing the WQE 1, and then may access the storage location 1 in the memory 111.

Step 3: The RNIC 12 reads the M1 at the storage location 1 into the cache 121.

The RNIC 12 may read data (namely, the M1) at the storage location 1 into the cache 121.

Step 4: The RNIC 12 encapsulates M1 into a packet 1, and sends the packet 1 to the RNIC 22 through the channel n1-n2.

Optionally, the RNIC 12 may encapsulate M1 into the packet 1 according to an RDMA protocol, and send the packet 1 to the RNIC 22 through the channel n1-n2 bound to the SSQ #1. For example, the RDMA protocol may be a wireless bandwidth (infiniband) protocol, an RDMA (RDMA over Converged Ethernet version 1, RoCE1) protocol using an aggregated Ethernet version 1, an RDMA (RDMA over Converged Ethernet version 2, RoCE2) protocol using an aggregated Ethernet version 2, or an internet wide area RDMA protocol (internet wide area RDMA protocol, iWARP).

After receiving the packet 1, the RNIC 22 may decapsulate the packet 1 to obtain the M1.

Step 5: The RNIC 22 stores the M1 on the host 21.

Assuming that M1 is data to be stored in the host 21, the RNIC 22 may store M1 on the host 21. Further, it is assumed that the M1 is used to be written into a memory 211 of the process #3. For example, after decapsulating the packet 1, the RNIC 22 may further obtain a write location of the M1 in the memory 211, and the RNIC 22 may write the M1 into the memory 211 based on the write location.

The following describes step 4 and step 5 in detail with reference to a send (send) model, a write (write) model, a read (read) model, and an atomic (atomic) model of RDMA. Details are not described herein.

The computer system shown in FIG. 2B describes, by using a dashed line representing a data transmission process and a sequence number of the dashed line, a process in which the data transmission system provided in this embodiment of this application notifies the process #1 of a completion status of the M1. The structure in FIG. 2B may be explained as a corresponding structure in the computer system shown in FIG. 2A, and details are not described herein again.

Refer to FIG. 2B. The RNIC 12 may separately create a completion queue (complete queue, CQ) for the process #1 and the process #2 in the memory 13. In this embodiment of this application, a CQ corresponding to the process #1 is referred to as a CQ #1, and a CQ corresponding to the process #2 is referred to as a CQ #2. The CQ #1 is used to feed back, to the process #1, a completion status of a message (for example, the M1) submitted by the process #1 to the RNIC 12, and the CQ #2 is used to feed back, to the process #2, a completion status of a message (for example, the M2) submitted by the process #2 to the RNIC 12.

With reference to FIG. 2B, the following describes a process in which the RNIC 12 and the RNIC 22 notify the process #1 of the completion status of the M1 according to an embodiment of this application.

Step 6: The RNIC 22 sends a packet 2 including a R1 to the RNIC 12 through the channel n1-n2.

After receiving the packet 1, the RNIC 22 may send the packet 2 to the RNIC 12 through the channel n1-n2, where the packet 2 includes a feedback message (the R1 for short), and the R1 describes a completion status of the message. For example, the completion status of the message may be that the RNIC 22 successfully receives the message, or the RNIC 22 successfully writes the message into the host 21, or the RNIC 22 does not receive the message, or the message fails to be written. After receiving the packet 2, the RNIC 12 may decapsulate the packet 2 to obtain the R1. The RNIC 12 may determine the completion status of the message described by the R1.

Optionally, the R1 is a field (referred to as a field R) in the packet 2, and different values of the field R correspond to different completion statuses of the message. For example, when the value of the field R is 0, the RNIC 12 may determine that the completion status of the message is success, for example, the RNIC 22 successfully receives the message. When the value of the field R is 1, the RNIC 12 may determine that the completion status of the message is failure, for example, the RNIC 22 does not receive the message.

Step 7: The RNIC 12 reads the WQE 1 in the SSQ #1 into the cache 121, to obtain an identifier of the CQ #1.

After obtaining the packet 2 from the channel n1-n2, the RNIC 12 may determine that the R1 in the packet 2 corresponds to the WQE in the SSQ #1. However, because the SSQ #1 corresponds to a plurality of processes running on the host 11, the RNIC 12 cannot determine a process corresponding to the completion status corresponding to the R1, and cannot determine which CQ should process the R1. Therefore, after determining that an SSQ of the bound channel n1-n2 is the SSQ #1, the RNIC 12 may determine, based on the context S1 of the SSQ # 1, that R1 corresponds to the WQE 1 in the SSQ #1. In this embodiment of this application, the identifier of the CQ #1 may be included in the WQE 1. Correspondingly, after reading the WQE 1 from the SSQ #1 to the cache 121, the RNIC 12 may parse the WQE 1 to obtain the identifier of the WQE1CQ #1, to determine that the completion status corresponding to the R1 needs to be processed by the CQ #1.

Step 8: The RNIC 12 writes a CQE 1 into the CQ #1 based on the identifier of the CQ #1 and the R1.

Step 9: The RNIC 12 processes a CQE in the CQ #1, and when the CQE 1 is processed, notifies the process #1 of the completion status of the M1.

The following describes step 8 and step 9.

After obtaining the identifier of the CQ #1, the RNIC 12 may write the completion queue element (CQ element, CQE) 1 into the CQ #1 based on the R1. The CQE 1 is used to determine the completion status of M1. In a process of processing the CQE in the CQ #1, when processing the CQE 1, the RNIC 12 may notify the process #1 of the completion status of the M1.

Optionally, that the RNIC 12 notifies the process #1 of the completion status of the M1 may mean that the process #1 invokes a program interface and a driver of the RNIC 12 to retrieve the CQE in the CQ #1. When the CQE 1 is retrieved, the process #1 can obtain the completion status of the M1.

Optionally, the CQE indicates a completion status of a corresponding message by using some included fields (for example, referred to as an error code). For example, when the process #1 parses the CQE 1 and determines that a value of the error code in the CQE 1 is 0, the process #1 may determine that the completion status of the M1 is success, specifically, for example, a data transmission task corresponding to the M1 is completed. For example, when the process #1 parses the CQE 1 and determines that a value of the error code in the CQE 1 is 1, the process #1 may determine that the completion status of the M1 is failure, specifically, for example, a data transmission task corresponding to M1 is not completed.

Optionally, the RNIC 12 may determine the value of the error code in the CQE 1 based on the R1. Optionally, the completion status described by the value of the error code in the CQE 1 is consistent with the completion status described by the R1. For example, if the completion status of the message described by the R1 is success, the value of the error code in the CQE 1 may be 0; if the completion status of the message described by the R1 is failure, the value of the error code in the CQE 1 may be 1. Alternatively, optionally, the completion status described by the value of the error code in the CQE 1 is inconsistent with the completion status described by the R1. For example, if that the completion status of the message is success is described by the R1, but the RNIC 12 may not correctly encapsulate the packet 1 due to a fault (an M1 error or a destination address error), the value of the error code in the CQE 1 may be 1.

The following describes, by using an example, a process in which the RNIC 12 writes a CQE and reads the CQE in the CQ #1.

In a possible implementation, the memory 13 further includes a context of the CQ #1 (a context C1 for short), and the context C1 records usage information of the CQ #1. For example, the context C1 may include a write index of the CQ #1 (a PI of the CQ #1 for short) and a read index of the CQ #1 (a CI of the CQ #1 for short). The RNIC 12 may determine a write location of a CQE in the CQ #1 based on a value of the PI, and determine a read location of the CQE in the CQ #1 based on a value of the CI.

FIG. 2B shows only an example of three storage locations for placing CQEs in the CQ #1. The CQ #1 may further include more or fewer CQEs. In addition, for ease of understanding, the three storage locations for storing the CQEs in the CQ #1 are drawn as three rectangles sequentially arranged from top to bottom in FIG. 2B. In this embodiment of this application, the three storage locations that are used to store the CQEs and that are in the CQ #1 shown in FIG. 2B are respectively referred to as a storage location T, a storage location M, and a storage location B from top to bottom. A storage manner of each CQE in the CQ #1 is not limited in this embodiment of this application. For example, the CQ #1 may correspond to continuous storage space in the memory 13, or may correspond to discrete storage space in the memory 13.

Refer to FIG. 2B. As an example, after generating a CQE 4, the RNIC 12 may determine, based on the context C 1, that the PI of the CQ # 1 points to the storage location T of the CQ #1, and then write the CQE 4 at the storage location T, and update a value of the PI of the CQ #1, so that the PI points to the storage location M of the CQ #1. Then, after generating the CQE 3, the RNIC 12 may write the CQE 3 at the storage location M based on the value of the PI of the CQ #1 in the context C1, and update the value of the PI of the CQ #1, so that the value of the PI points to the storage location B.

FIG. 2B shows storage locations, to which the CI and the PI point, in the memory 13 after the RNIC 12 writes the CQE 4 and the CQE 2 into the CQ #1. In a possible implementation, the CQ #1 is configured to sequentially process CQEs written into the CQ #1. Assuming that the CQE 4 is written into the CQ #1 before the CQE 3, a value of the CI of the CQ #1 may first point to the CQE 4. The RNIC 12 processes the CQE 4, and notifies the process #1 of a completion status of a message (referred to as a M4) corresponding to the CQE 4. Then, the value of the CI of the CQ #1 is updated to point to the CQE 3, so that the RNIC 12 continues to process the CQE 3, and notifies the process #1 of a completion status of the message (referred to as a M3) corresponding to the CQE 3.

Refer to FIG. 2B. It is assumed that after generating the CQE 1, the RNIC 12 writes the CQE 1 into the storage location B of the CQ #1 from the value of the context C1 based on the identifier of the CQ #1. After sequentially processing the CQE 4 and the CQE 3, the RNIC 12 updates the value of the CI of the CQ #1 to the storage location B that points to the CQ #1, so that the RNIC 12 continues to process the CQE 3 in the storage location B of the CQ #1, and notifies the process #1 of the completion status of the M1.

The foregoing describes the data transmission procedure corresponding to step 1 to step 9 with reference to FIG. 2A and FIG. 2B. After step 6, because the SSQ bound to the channel n1-n2 stores WQEs of a plurality of processes on the host 11, the RNIC 12 cannot determine a process on the host 11 corresponding to the packet 2 returned by the channel n1-n2, and cannot determine a CQ in the memory 13 that needs to be used to process the R1 in the packet 2. Therefore, the RNIC 12 needs to obtain an identifier of a corresponding CQ (that is, the identifier of the CQ #1) by performing step 7. Specifically, the RNIC 12 first determines that an SSQ of the bound channel n1-n2 is the SSQ #1, and then determines, based on the context S1 of the SSQ #1, that the R1 corresponds to the WQE 1 in the SSQ #1, reads the WQE 1 from the SSQ #1 to the cache 121, and parses the WQE 1 to obtain the identifier of the CQ #1. Because step 7 includes a process in which the RNIC 12 reads the WQE 1 from the memory 13, a delay of reading the memory 13 by the RNIC 12 is increased in step 7, and efficiency of notifying the process #1 of the completion status of the M1 by the RNIC 12 is reduced. In addition, because space of the cache 121 is limited, reading the WQE 1 from the memory 13 into the cache 121 may cause aging and deletion of a to-be-sent WQE pre-fetched into the cache 121, thereby causing a delay in sending a service.

After the delay and a cause of the delay are found through analysis, some content in step 1 to step 9 is optimized in this embodiment of this application. The following describes an optimization solution.
1: Optimize step 4. Before step 4 is optimized, the packet 1 includes the M1. After step 4 is optimized, with reference to content in brackets in step 4 in FIG. 2A, identification information is included in packet 1 based on the M1. Optionally, the identification information may be the identifier of the CQ #1 and/or an identifier of the process #1.
2: Optimize step 6. Before step 6 is optimized, the packet 2 includes the R1. After step 6 is optimized, with reference to content in brackets in step 6 in FIG. 2B, all or a part of identification information included in the packet 1 is added to the packet 2.
3: Skip step 7. Because the packet 2 includes the identifier of the CQ #1, with reference to "×" on the dashed line corresponding to step 7 in 2B, the RNIC 12 may not need to perform step 7 to obtain the identifier of the CQ #1.

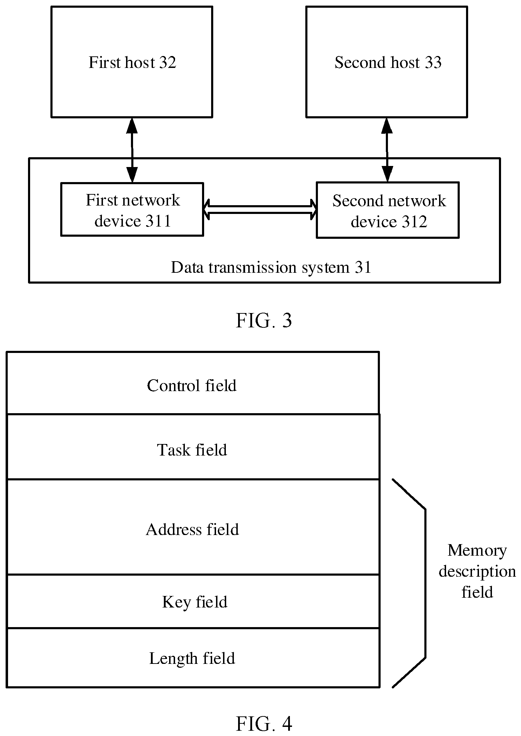

Based on a concept of the foregoing step 1 to step 9 and optimization content, FIG. 3 shows another possible embodiment of a computer system in this application.

Refer to 3. A computer system 3 may include a data transmission system 31, a first host 32, and a second host 33. The data transmission system 31 includes a first network device 311 and a second network device 312. The first network device 311 is disposed on the first host 32, and the second network device 312 is disposed on the second host. The data transmission system 31 may be an RDMA data transmission system, and an RDMA data transmission message may be transmitted between the first network device 311 and the second network device 312.

Optionally, the computer system 3 may be explained as the computer system shown in FIG. 1B, FIG. 1C, FIG. 2A, or FIG. 2B. Optionally, the data transmission system 31 may be explained as the data transmission system shown in FIG. 1B, FIG. 1C, FIG. 2A, or FIG. 2B. Optionally, the first host 32 may be explained as including the host 11 shown in FIG. 2A or FIG. 2B. Optionally, the second host 33 may be explained as including the host 21 shown in FIG. 2A or FIG. 2B. Optionally, the first network device 311 may be explained as including the network device #1 shown in FIG. 1B or FIG. 1C, or as including the RNIC 12 shown in FIG. 2A or FIG. 2B, or as including the RNIC 12 and the memory 13 shown in FIG. 2A or FIG. 2B. Optionally, the second network device 312 may be explained as including the network device #2 shown in FIG. 1B or FIG. 1C, or may be explained as including the RNIC 22 shown in FIG. 2A or FIG. 2B.

The first host 32 may run one or more processes, and the first network device 311 may create an SSQ used by a plurality of processes in the one or more processes. Refer to the computer system shown in FIG. 2A or FIG. 2B. Optionally, one or more processes run on the first host 32 may include, for example, the process #1 and the process #2, and an SSQ created by the first network device 311 may be, for example, the SSQ #1 in the memory 13.

Optionally, the SSQ may be disposed in a memory of the first network device, or may be disposed in a memory of the first host. For example, the SSQ may be disposed in the memory 13 shown in FIG. 2A or FIG. 2B.

For ease of description, in this embodiment of this application, one of the plurality of processes that use the SSQ is referred to as a first process. For example, the first process may be interpreted as the process #1 in the embodiment corresponding to FIG. 2A or FIG. 2B. The following describes functions of the first network device 311 and the second network device 312 in the data transmission system 31 by using a process in which the data transmission system 31 processes a data transmission message of the first process as an example.

The first network device 311 may be configured to obtain the data transmission message of the first process from the SSQ. Optionally, the data transmission message may be explained as the M1 in the embodiment corresponding to FIG. 2A or FIG. 2B. Optionally, the SSQ is specifically configured to store work requests from a plurality of processes. That the first network device 311 obtains the data transmission message from the SSQ may specifically mean that the first network device 311 is configured to obtain a first work request from the first process from the SSQ, and then obtain the data transmission message based on the first work request. The first work request describes the data transmission message.

Optionally, for example, the work requests that are from the plurality of processes and that are stored in the SSQ may be understood with reference to the WQE 1 and the WQE 2 shown in FIG. 2A or FIG. 2B, and the first work request may be understood with reference to the WQE 1 shown in FIG. 2A or FIG. 2B.

FIG. 4 shows a possible structure of the first work request. Refer to FIG. 4. The first work request may include a control field, a task field, and a memory description field.

The task field may be used to describe format information of the first work request. The task field may include indication information indicating that the first network device 311 processes the data transmission message. For example, the task field may include identification information. Optionally, the identification information may include a first identifier corresponding to a first process. Optionally, the first identifier in the identification information may be explained as the identifier of the CQ #1 and/or the identifier of the process #1 in the embodiment corresponding to FIG. 2A or FIG. 2B. The identification information may further include other information. Possible content of the other information is described below, and details are not described herein.

Optionally, the first work request may further include a memory description field. The memory description field may be used to describe memory space registered by the first network device 311 and/or the second network device 312. The first network device 311 may obtain the data transmission message from the first host 32 based on the memory description field. Optionally, the memory description field may include an address field, and the address field may be used to determine a start location of the memory space. Optionally, the memory description field may further include a length (length) field that is used to determine a length of the memory space. Optionally, the memory description field may further include a key (key) field that is used to uniquely identify the memory space.

The first network device 311 may further encapsulate a first packet based on to the data transmission message and the identification information, and then send the first packet to the second network device. Optionally, the first network device 311 may encapsulate the first packet according to an RDMA protocol.

Optionally, the first packet may be explained as the packet 1 in the optimized embodiment corresponding to FIG. 2A or FIG. 2B, that is, the first packet may include the data transmission message and the identification information.

The second network device 312 may be configured to receive the first packet, and decapsulate the first packet to obtain the data transmission message and the identification information. Then, the second network device 312 may generate a feedback message based on the data transmission message, to indicate a completion status of the data transmission message. Optionally, after obtaining the data transmission message, the second network device 312 generates a feedback message, to notify the first network device 311 that the data transmission message has been successfully received. Alternatively, the second network device 312 may generate a corresponding feedback message based on whether the data transmission message is successfully written into the second host 33. For example, if the data transmission message is successfully written into the second host 33, a completion status indicated by the feedback message may be a success; or if the data transmission message fails to be written into the second host 33, a completion status indicated by the feedback message may be a failure. Optionally, the feedback message may be explained as the R1 in the embodiment corresponding to FIG. 2B.

The second network device 312 may be further configured to encapsulate a second packet based on the feedback message and the identification information, and send the second packet to the first network device 311. Optionally, the second packet may be explained as the packet 2 in the optimized embodiment corresponding to FIG. 2B, that is, the second packet may include the first identifier and the feedback message.

The first network device 311 may be further configured to receive the second packet, and decapsulate the second packet to obtain the feedback message and the identification information. Then, the first network device 311 may notify the first process of the completion status of the data transmission message based on the identification information and the feedback message in the second packet.

Optionally, the first network device 311 may create a plurality of CQs for a plurality of processes running on the first host 32. Each process corresponds to some CQs (for example, one CQ) in the plurality of CQs, and each CQ is used to notify a corresponding process of a completion status of a message. In this embodiment of this application, a CQ that is in the plurality of CQs and that corresponds to the first process is referred to as a first CQ.

Optionally, the CQ created by the first network device 311 may be explained as the CQ #1 or the CQ #2 in the embodiment corresponding to FIG. 2B. For example, refer to the embodiment corresponding to FIG. 2A or FIG. 2B. The first network device 311 may create the CQ #1 for the process #1, and create the CQ #2 for the process #2. The CQ #1 is used to notify the process #1 of a completion status of a message submitted by the process #1, and the CQ #2 is used to notify the process #2 of a completion status of a message submitted by the process #2.

That the first network device 311 notifies the first process of the completion status of the data transmission message based on the first identifier and the feedback message in the second packet may be that the first network device 311 determines a CQ (referred to as the first CQ) corresponding to the first identifier from the plurality of CQs, and writes a CQE (referred to as a first CQE) into the first CQ based on the feedback message. The first CQE describes the completion status of the data transmission message. Optionally, the first CQE may be explained as the CQE 1 in the embodiment corresponding to FIG. 2B.

Optionally, the first CQE indicates the completion status of the data transmission message by using some included fields (for example, referred to as an error code). For example, the first process parses the first CQE. If a value of the error code in the first CQE is 0, the first process may determine that the completion status of the data transmission message is success, which is specifically, for example, that transmission of the data transmission message is completed. For example, the first process parses the first CQE. If a value of the error code in the first CQE1 is 1, the first process may determine that the completion status of the data transmission message is failure, which is specifically, for example, that transmission of the data transmission message is not completed.

Optionally, the completion status of the data transmission message notified by the first network device 311 may be consistent with the completion status described in the feedback message. For example, if that the completion status of the data transmission message is success is described by the feedback message, the first network device 311 may notify the first process that the data transmission message is completed or transmission of the data transmission message succeeds. If that the completion status of the data transmission message is failure is described by the feedback message, the first network device 311 may notify the first process that the data transmission message is not completed or transmission of the data transmission message fails.

Alternatively, optionally, the completion status of the data transmission message notified by the first network device 311 may be inconsistent with the completion status described in the feedback message. For example, if that the completion status of the data transmission message is success is described by the feedback message, but the first network device 311 may not correctly encapsulate the first packet due to a fault (for example, the encapsulated data transmission message is incorrect or a destination address is incorrect), the first network device 311 may notify the first process that the data transmission message is not completed or transmission of the data transmission message fails.

In the embodiment corresponding to FIG. 3, the first network device 311 may create an SSQ used by the plurality of processes running on the first host 32. After obtaining the data transmission message of the first process from the SSQ, the first network device 311 may encapsulate, in the packet (namely, the first packet) in which the data transmission message is encapsulated, the first identifier corresponding to the first process. After receiving the first packet, the second network device 312 may encapsulate the first identifier in the packet in which the feedback message is encapsulated (namely, the second packet). In this way, after receiving the second packet, the first network device 312 does not need to determine, based on a context of the SSQ, that the feedback message in the second packet corresponds to the first process, but may determine, based on the first identifier in the second packet, that the feedback message corresponds to the first process. This helps efficiently notify the first process that the data transmission message has been processed, thereby improving running efficiency of the first process.

The following describes the embodiment corresponding to FIG. 3 in a supplementary manner.
1. As mentioned in the embodiment corresponding to FIG. 3, the first identifier may be explained as the identifier of the CQ #1 and/or the process #1 in the embodiment corresponding to FIG. 2A or FIG. 2B. Optionally, a specific meaning of the first identifier is not limited in this embodiment of this application, provided that the first identifier can be used to determine the first CQ.

An example in which the first identifier is the identifier of the first process is used to describe a method in which the first network device 311 determines the first CQ based on the identifier of the first process. The first network device 311 may store a mapping table, where the mapping table records a correspondence between a process and a CQ. After decapsulating the second packet to obtain an identifier of the first process, the first network device 311 may search the mapping table for the correspondence between the first process and the first CQ, to determine an identifier of the first CQ. Still refer to the embodiment corresponding to FIG. 2B. After obtaining the identifier that is of the process #1 and that is included in the packet 2, the RNIC 12 may obtain the identifier of the CQ #1 from the mapping table, to write the CQE 1 into the CQ #1.

Optionally, the first identifier may include the identifier of the first process and the identifier of the first CQ, and the first CQE may include the identifier of the first process. Optionally, the first process and another process may share a same CQ, and the first process may determine, by using the identifier of the first process included in the first CQE, that the first CQE is a CQE of the first process. In this way, although the CQ created by the first network device 311 is still not shared by all processes, some processes share one CQ. This helps reduce a quantity of created CQs, thereby helping save memory space.

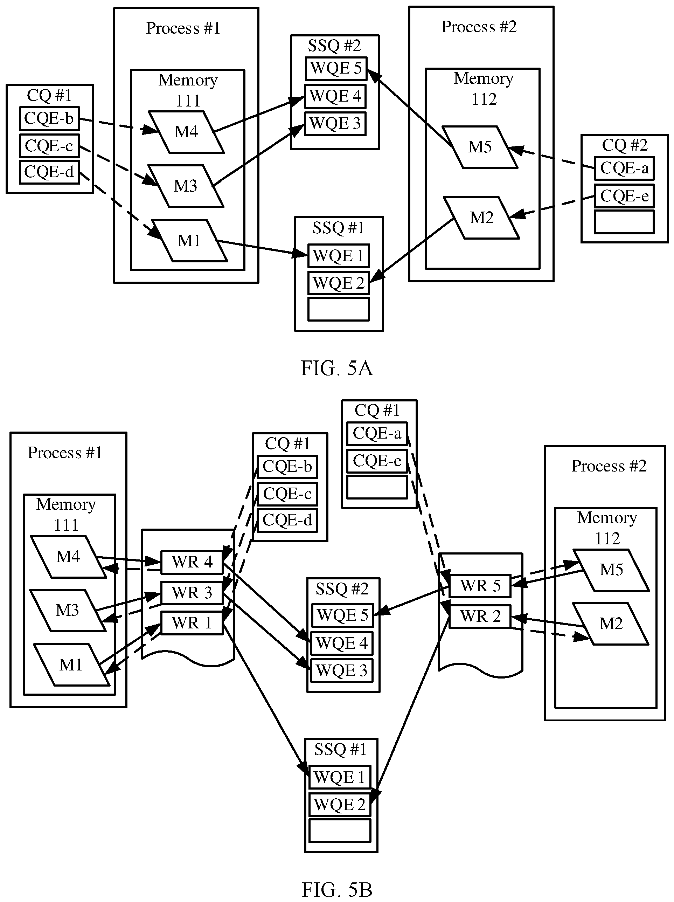

2. FIG. 5A shows, by using a solid line segment with an arrow, an example of a process in which the first network device 311 obtains a data transmission message of a process, and shows, by using a dashed line segment with an arrow, an example of a process in which the first network device 311 notifies the process of a completion status of the data transmission message. With reference to the embodiment corresponding to FIG. 2A or FIG. 2B, the following describes a process described in FIG. 5A.

Refer to the embodiment corresponding to FIG. 1C. It is assumed that the computer system shown in FIG. 2A or FIG. 2B further includes the node #3, the SSQ #2 created by the RNIC 12 may bind the channel n1-n3 between the node #1 and the node #3, and the SSQ #2 is used to obtain a message sent to the node #3. It is assumed that messages to be transmitted in the process #1 sequentially include a M4, a M3, and a M1, where the M4 and the M3 are used to be sent to the node #3. It is assumed that messages to be transmitted in the process #2 sequentially include a M5 and a M2, where the M5 is used to be sent to the node #3.

The RNIC 12 may sequentially write, into an SSQ #2 based on a value of a PI of the SSQ #2, a WQE 5 corresponding to the M5, a WQE 4 corresponding to the M4, and a WQE 3 corresponding to the M3, and sequentially write, into the SSQ #1 based on the value of the PI of the SSQ #1, a WQE 1 corresponding to the M1 and a WQE 2 corresponding to the M2. Then, the RNIC 12 may sequentially process WQEs in the SSQ #2 based on a value of a CI of the SSQ #2, and send a corresponding message. Then, the RNIC 12 may sequentially process WQEs in the SSQ #1 based on the value of the CI of the SSQ #1, and send a corresponding message. It is assumed that the RNIC 12 sequentially sends the M5, the M4, the M3, the M1, and the M2 from first to last.

After receiving a packet that includes a feedback message, the RNIC 12 may determine a corresponding CQ based on a first identifier included in the packet. It is assumed that the RNIC 12 sequentially receives a packet a corresponding to the M5, a packet b corresponding to the M4, a packet c corresponding to the M3, a packet d corresponding to the M1, and a packet e corresponding to the M2 from first to last. The RNIC 12 adds a CQE-a to the CQ #2 based on an identifier that is of the CQ #2 and that is included in the packet a, adds a CQE-b to the CQ #1 based on an identifier that is of the CQ #1 and that is included in the packet b, and similarly adds a WQE-c and a CQE-d to the CQ #1, and adds a CQE-e to the CQ #2.

The process #1 may separately determine, according to a write sequence of CQEs in the CQ #1, that the CQE-b corresponds to the M4, the CQE-c corresponds to the M3, and the CQE-d corresponds to the M1. Similarly, the process #2 may separately determine, according to a write sequence of CQEs in the CQ #2, that the CQE-a corresponds to the M5 and the CQE-e corresponds to the M2.

To more efficiently and accurately notify a completion status of a process message, optionally, identification information in the first packet and the second packet may further include a second identifier, and the second identifier is used to determine a data transmission message from a plurality of data transmission messages of the first process. Correspondingly, the first network device is specifically configured to notify the first process of the completion status of the data transmission message based on the first identifier, the feedback message, and the second identifier. Optionally, the first CQE may include the second identifier.

Still refer to FIG. 5A. Optionally, second identifiers corresponding to the M4, the M3, and the M1 may be sequence numbers of corresponding messages. For example, second identifiers of the M4, the M3, and the M1 may be 1, 2, and 3 respectively. Second identifiers included in the CQE-b, the CQE-c, and the CQE-d are 1, 2, and 3 respectively. The process #1 may determine, based on the second identifier of each CQE in the CQ #1, that the CQE-b corresponds to the M4, the CQE-c corresponds to the M3, and the CQE-d corresponds to the M1.

Refer to FIG. 5B. It is assumed that the process #1 sequentially submits, by invoking a program interface and a driver of the RNIC 12, a WR 4 that describes the M4, a WR 3 that describes the M3, and a WR 1 that describes the M1 to the RNIC 12, and the process #2 sequentially submits, by invoking the program interface and the driver of the RNIC 12, a WR 5 that describes the M5 and a WR 2 that describes the M2 to the RNIC 12. The RNIC 12 adds corresponding WQEs to the SSQ #2 and the SSQ #1 based on the WR 5, the WR 4, the WR 3, the WR 1, and the WR 2 in sequence. In this case, optionally, the second identifier of the message may be an identifier of a corresponding WR (for example, a sequence number of the WR). After the RNIC 12 adds a CQE of a corresponding message to the CQ #1 and the CQ #2, the process #1 may determine, based on the second identifier of each CQE in the CQ #1, the message corresponding to the CQE, for example, by determining that the CQE-b corresponds to the WR 4, determine that the CQE-b corresponds to the M4.

3. The following describes the data transmission message, the first packet, and the second packet in the embodiment corresponding to FIG. 3 in a supplementary manner.
(1) Optionally, the data transmission message of the first process may include first data to be written into the second host 33. The second network device 312 is configured to store the first data on the second host after obtaining the first data.

Optionally, the first network device 311 may divide the first data into a plurality of data segments (segment), and may sequentially encapsulate the plurality of segments into a plurality of packets (referred to as a first packet sequence). Correspondingly, the first packet in the embodiment corresponding to FIG. 3 may be the first packet sequence.

Optionally, the first network device 311 may encapsulate identification information into each packet in the first packet sequence, or encapsulate identification information only into the last packet in the first packet sequence. Optionally, the identification information may be encapsulated in an extension header of the packet, and the first data or the data segment may be used as payload data of the packet. The following describes a sending process of the first packet and the second packet by using an example in which the first network device 311 encapsulates identification information into each packet in the first packet sequence.

For example, in the embodiment corresponding to FIG. 3, the data transmission system 31 may execute, by using a send (send) operation, a write (write) operation, or an atomic (atomic) operation, a work request corresponding to a data transmission message.

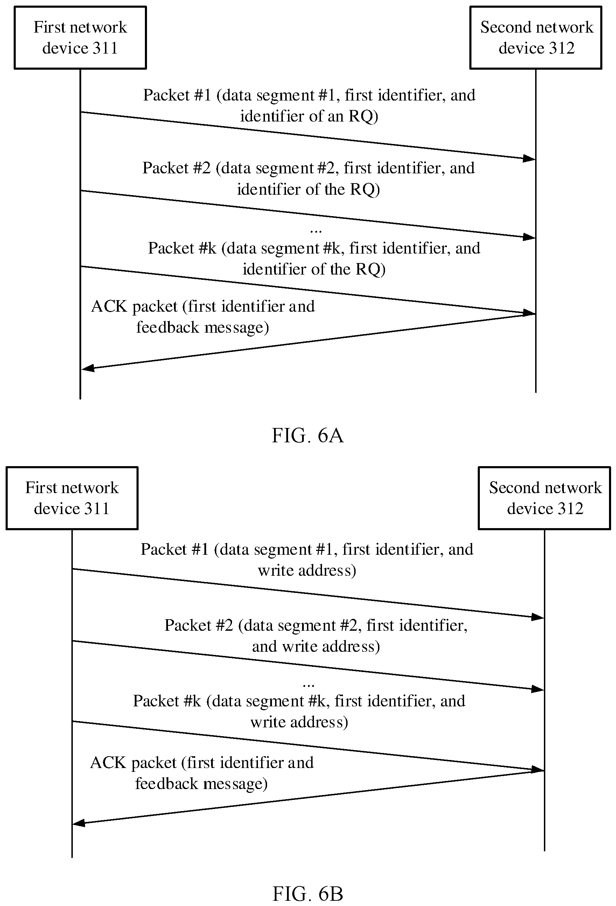

FIG. 6A shows a transmission process of a first packet and a second packet that correspond to a send operation. Refer to FIG. 6A. The first packet sequence includes a packet #1, a packet #2, ..., and a packet #k, the packet #1, the packet #2, ..., and the packet #k respectively include a data segment #1, a data segment #2, ..., and a data segment #k in first data, and k is any positive integer. In addition, each packet in the first packet sequence includes identification information. Optionally, the identification information may include the first identifier described above, and may further include the second identifier. In addition, the identification information may further include a third identifier. The third identifier may include an identifier of a second process and/or an identifier of an RQ corresponding to the second process. FIG. 6A shows an example of the first identifier and the identifier of the RQ in the identification information.

For example, the third identifier includes the RQ corresponding to the second process. After receiving the first packet sequence sent by the first network device 311, the second network device 312 may read a WQE from an RQ corresponding to the third identifier. The WQE describes storage space corresponding to the second process. Then, the second network device 312 may store the first data in the storage space described by the WQE. After receiving the first packet sequence, the second network device 312 may send an acknowledgment packet to the first network device 311. The acknowledgment packet includes an acknowledge character (acknowledge character, ACK). Therefore, the acknowledgment packet is referred to as an ACK packet in this embodiment of this application. The ACK packet may include the feedback message (for example, an acknowledge character) described above, and may further include all or some content in the identification information in the first packet sequence. For example, the ACK packet may further include the first identifier.

FIG. 6B shows a transmission process of a first packet and a second packet corresponding to a write operation. Refer to FIG. 6B. A first packet sequence includes a packet #1, a packet #2, ..., and a packet #k, the packet #1, the packet #2, ..., and the packet #k respectively include a data segment #1, a data segment #2, ..., and a data segment #k in the first data, and k is a positive integer greater than or equal to 3. In addition, each packet in the first packet sequence includes identification information. Optionally, the identification information may include the first identifier described above, and optionally, may further include the second identifier. FIG. 6B shows an example of the first identifier in the identification information.

In addition, a write location of the first data in the second host 33 may be further encapsulated in the packet #1. After receiving the first packet sequence, the second network device 312 may store the first data in the second host 33 based on the write location. After receiving the first packet sequence, the second network device 312 may send an ACK packet to the first network device 311. The ACK packet may include the feedback message (for example, an acknowledge character) described above, and may further include all or some content in the identification information in the first packet sequence. For example, the ACK packet may further include the first identifier.

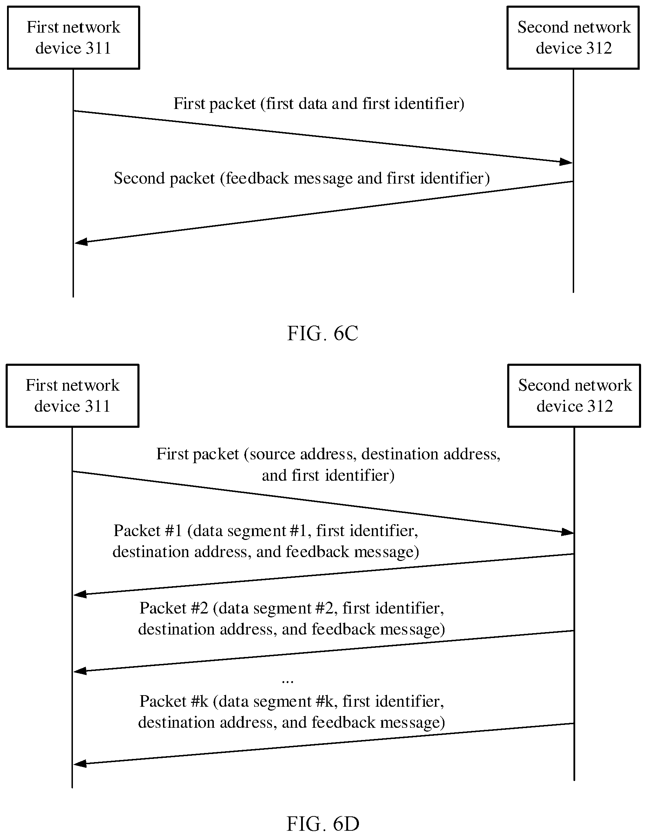

FIG. 6C shows a transmission process of a first packet and a second packet corresponding to an atomic operation. Refer to FIG. 6C. The first packet includes first data and identification information. Optionally, the identification information may include the first identifier described above, and optionally, may further include the second identifier. FIG. 6C shows an example of the first identifier in the identification information. After receiving the first packet, the second network device 312 may store the first data in the second host 33. After receiving the first packet, the second network device 312 may send a second packet to the first network device 311. The second packet may be, for example, an atomic feedback (atomic response) packet or an atomic acknowledge (atomic acknowledge) packet. The second packet may include the feedback message (for example, an acknowledge character) described above, and may further include all or some content in the identification information in the first packet sequence. For example, the second packet may further include the first identifier.

(2) Optionally, the data transmission message may include a source address and a destination address of the first data, the source address of the first data points to the second host 33, and the destination address of the first data points to the first host 32. Therefore, the data transmission message may not include the first data.

The second network device 312 may be configured to: after obtaining the source address, the destination address, and the identification information that are encapsulated in the first packet, read the first data on the second host 33 based on the source address, encapsulate the second packet based on the first data, the identification information, the feedback message, and the destination address, and send the second packet to the first host 32. FIG. 6B shows an example of the first identifier in the identification information.

Optionally, the identification information may be encapsulated in an extension header of a packet. The first network device 311 is configured to: after obtaining the first data and the destination address in the second packet, store the first data on the first host based on the destination address. The first network device 311 is further configured to notify the first process of the completion status of the data transmission message based on the first identifier and the feedback message in the second packet.

Optionally, the second network device 312 may divide the first data into a plurality of segments, and may sequentially encapsulate the plurality of segments into a plurality of packets (referred to as a second packet sequence). Correspondingly, the second packet in the embodiment corresponding to FIG. 3 may be the second packet sequence.

Optionally, the second network device 312 may encapsulate some or all content of the identification information into each packet in the second packet sequence, or encapsulate some or all content of the identification information into only the last packet in the second packet sequence. Optionally, the identification information may be encapsulated in an extension header of the packet, and the first data or the data segment may be used as payload data of the packet. The following describes a sending process of the first packet and the second packet by using an example in which the first network device 311 encapsulates the first identifier into each packet in the first packet sequence.

FIG. 6D shows a transmission process of a first packet and a second packet corresponding to a read (read) operation. Refer to FIG. 6D. The first packet includes a source address, a destination address, and a first identifier. After receiving the first packet, the second network device 312 may read first data from the second host 33 based on the source address, and then fragment the first data to sequentially obtain a data segment #1, a data segment #2, ..., and a data segment #k, and k is a positive integer greater than or equal to 3. Then, the second network device 312 may encapsulate and send the second packet sequence. The second packet sequence includes a packet #1, a packet #2, ..., and a packet #k. The packet #1, the packet #2, ..., and the packet #k respectively include the data segment #1, the data segment #2, ..., and the data segment #k. In addition, each packet in the second packet sequence may further include the destination address, the first identifier, and a feedback message. After receiving the second packet, the first network device 311 may store the first data in the first host 32 based on the destination address, and notify the first process of the completion status of the data transmission message based on the first identifier and the feedback message.

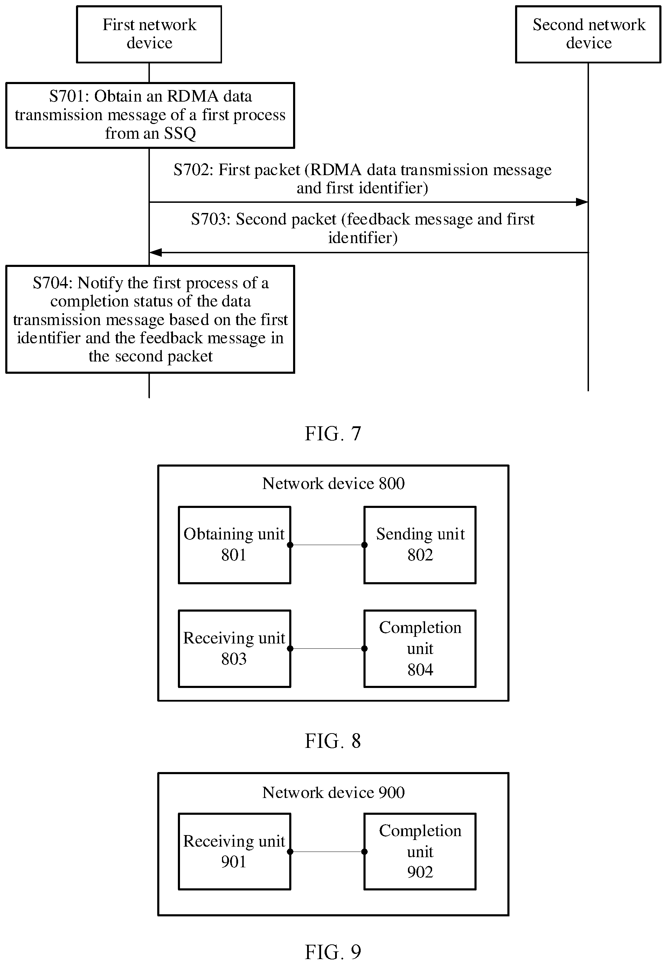

The foregoing describes the computer system and the data transmission system that are provided in embodiments of this application. Based on a same inventive concept, an embodiment of this application further provides a data transmission method. The method may be an RDMA data transmission method. Refer to FIG. 7. The data transmission method may include step S701 to step S704.

S701: A first network device obtains an RDMA data transmission message of a first process from an SSQ.

The first network device may be disposed on a first host. The first process is any one of a plurality of processes that are run on the first host and that use the shared send queue. The data transmission message may be an RDMA data transmission message.

S702: The first network device sends a first packet to a second network device.

The second network device is disposed on a second host, and the first packet includes the data transmission message and a first identifier corresponding to the first process.

The second network device receives the first packet from the first network device, where the first network device is disposed on the first host, the second network device is disposed on the second host, the first packet includes the data transmission message of the first process and the first identifier corresponding to the first process, the data transmission message is obtained by the first network device from the shared send queue, and the first process is any one of the plurality of processes that are run on the first host and that use the shared send queue.

S703: The second network device sends a second packet to the first network device based on the first packet, where the second packet includes the first identifier and a feedback message.

S704: The first network device notifies the first process of a completion status of the data transmission message based on the first identifier and the feedback message in the second packet.

The first network device receives the second packet from the second network device, where the second packet includes the first identifier and the feedback message, and the feedback message indicates the completion status of the data transmission message. The first network device notifies the first process of the completion status of the data transmission message based on the first identifier and the feedback message in the second packet.

It should be noted that a method corresponding to step S701, step S702, and step S704 is a method performed by the first network device, and the method may be considered as the method performed by the first network device in the embodiment corresponding to FIG. 3. For implementations and technical effects that are not described in detail in step S701, step S702, and step S704 performed by the first network device shown in FIG. 7, refer to related descriptions of the first network device in the embodiment shown in FIG. 3. For the method corresponding to step S701, step S702, and step S704, a method specifically performed by the second network device in step S703 is not limited in this embodiment of this application, provided that after the first network device sends the first packet to the second network device, the second network device may send the second packet including the first identifier to the first network device.

It should be noted that a method corresponding to step S703 is the method performed by the second network device, and the method may be considered as the method performed by the second network device in the embodiment corresponding to FIG. 3. For an implementation and a technical effect that are not described in detail in step S703 performed by the second network device shown in FIG. 7, refer to related descriptions of the second network device in the embodiment shown in FIG. 3. For the method corresponding to step S702, a step performed by the first network device is not limited in this embodiment of this application, provided that the first network device can send the first packet including the first identifier to the second network device.

The methods in embodiments of this application are described in detail above. For ease of better implementing the solutions in embodiments of this application, correspondingly related devices used to cooperate in implementing the solutions are further provided below.

FIG. 8 is a schematic diagram of a structure of a network device according to an embodiment of this application. The network device may be the first network device in the embodiment corresponding to FIG. 3 or FIG. 7, and may perform the methods and steps performed by the first network device in the corresponding embodiments.

As shown in FIG. 8, the network device 800 may include an obtaining unit 801, configured to obtain an RDMA data transmission message of a first process from a shared send queue, where the network device is disposed on a first host, and the first process is any one of a plurality of processes that are run on the first host and that use the shared send queue. The network device 800 may further include a sending unit 802, configured to send a first packet to a second network device, where the second network device is disposed on a second host, and the first packet includes an RDMA data transmission message and a first identifier corresponding to the first process. The network device 800 may further include a receiving unit 803, configured to receive a second packet from the second network device, where the second packet includes the first identifier and a feedback message, and the feedback message indicates a completion status of the RDMA data transmission message. The network device 800 may further include a completion unit 804, configured to notify the first process of the completion status of the RDMA data transmission message based on the first identifier and the feedback message in the second packet.

In a possible implementation, the first packet and the second packet further include a second identifier, and the second identifier is used to determine the RDMA data transmission message from a plurality of RDMA data transmission messages of the first process. The completion unit 804 is specifically configured to notify the first process of the completion status of the RDMA data transmission message based on the first identifier, the feedback message, and the second identifier.

In a possible implementation, the shared send queue is specifically configured to store work requests from the plurality of processes. The obtaining unit 801 is specifically configured to: obtain a first work request from the first process from the shared send queue, where the first work request describes the RDMA data transmission message, and obtain the RDMA data transmission message based on the first work request.

In a possible implementation, the completion unit 804 is specifically configured to: determine, from a plurality of completion queues based on the first identifier, a first completion queue corresponding to the first process, and write a work completion element into the first completion queue based on the feedback message, where the work completion element is used to notify the first process of the completion status of the RDMA data transmission message.

It should be understood that the units included in the network device 800 may be software modules, or may be hardware modules, or some are software modules and some are hardware modules.

For possible implementations and beneficial effects of the network device 800, refer to related content in the embodiments corresponding to FIG. 3 or FIG. 7. Details are not described herein again.

It should be noted that the structure of the network device 800 is merely an example, and should not constitute a specific limitation. Units in the network device may be added, deleted, or combined as required. In addition, operations and/or functions of the units in the network device 800 are intended to implement functions or the methods of the first network device described in FIG. 3 or FIG. 7. For brevity, details are not described herein again.

FIG. 9 is a schematic diagram of a structure of another network device according to an embodiment of this application. The network device may be the second network device in the embodiment corresponding to FIG. 3 or FIG. 7, and may perform the methods and steps performed by the second network device in the corresponding embodiments.

As shown in FIG. 9, the network device 900 may include a receiving unit 901, configured to receive a first packet from a first network device, where the first network device is disposed on a first host, the network device is disposed on a second host, the first packet includes an RDMA data transmission message of a first process and a first identifier corresponding to the first process, the RDMA data transmission message is obtained by the first network device from a shared send queue, and the first process is any one of a plurality of processes that are run on the first host and that use the shared send queue. The network device 900 may further include a sending unit 902, configured to send a second packet to the first network device based on the first packet, where the second packet includes a first identifier and a feedback message, and the first identifier and the feedback message indicate the first network device to notify the first process of a completion status of the RDMA data transmission message.

In a possible implementation, the first packet and the second packet further include a second identifier, the second identifier is used to determine the RDMA data transmission message from a plurality of RDMA data transmission messages of the first process, and the first identifier, the feedback message, and the second identifier indicate the first network device to notify the first process of the completion status of the RDMA data transmission message.

It should be understood that the units included in the network device 900 may be software modules, or may be hardware modules, or some are software modules and some are hardware modules.

For possible implementations and beneficial effects of the network device 900, refer to related content in the embodiments corresponding to FIG. 3 or FIG. 7. Details are not described herein again.

It should be noted that the structure of the network device 900 is merely an example, and should not constitute a specific limitation. Units in the network device may be added, deleted, or combined as required. In addition, operations and/or functions of the units in the network device 900 are intended to implement functions or the methods of the second network device described in FIG. 3 or FIG. 7. For brevity, details are not described herein again.

This application further provides a computer-readable storage medium. The computer-readable storage medium stores a computer program. When the computer program is executed by a processor, some or all of steps recorded in any one of the foregoing method embodiments may be implemented.

An embodiment of the present invention further provides a computer program, where the computer program includes instructions, and when the computer program is executed by a computer, the computer performs some or all steps of any method.

In the foregoing embodiments, the description of each embodiment has respective focuses. For a part that is not described in detail in an embodiment, reference may be made to related descriptions in other embodiments.

It should be noted that, for ease of description, the foregoing method embodiments are described as a series of combinations of actions. However, persons skilled in the art should be aware that this application is not limited to the described order of the actions, because some steps may be performed in another order or simultaneously according to this application. It should be further appreciated by a person skilled in the art that embodiments described in this specification all belong to example embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

In the embodiments of this application, "a plurality of" means two or more. This is not limited in this application. In embodiments of this application, "/" may represent an "or" relationship between associated objects. For example, A/B may represent A or B. "And/or" may be used to indicate that there are three relationships between associated objects. For example, A and/or B may represent the following three cases: Only A exists, both A and B exist, and only B exists. A and B may be singular or plural. To facilitate description of the technical solutions in embodiments of this application, in embodiments of this application, terms such as "first" and "second" may be used to distinguish between technical features having same or similar functions. The terms such as "first" and "second" do not limit a quantity and an execution sequence, and the terms such as "first" and "second" do not indicate a definite difference. In embodiments of this application, the term such as "example" or "for example" is used to represent an example, an illustration, or a description. Any embodiment or design scheme described with "example" or "for example" should not be explained as being more preferred or having more advantages than another embodiment or design scheme. Use of the term such as "example" or "for example" is intended to present a related concept in a specific manner for ease of understanding.

Embodiments in this specification are all described in a progressive manner, for same or similar parts in embodiments, reference may be made to these embodiments, and each embodiment focuses on a difference from other embodiments. Especially, a system embodiment is basically similar to a method embodiment, and therefore is described briefly; for related parts, reference may be made to partial descriptions in the method embodiment.

It is clear that a person skilled in the art may make various modifications and variations to the present invention without departing from the scope of the present invention. The present invention is intended to cover these modifications and variations provided that these modifications and variations of this application fall within the scope of protection defined by the following claims.

## Claims

1. A remote direct memory access RDMA data transmission system, wherein the RDMA data transmission system comprises a first network device and a second network device, the first network device is disposed on a first host, and the second network device is disposed on a second host;
the first network device is configured to: obtain an RDMA data transmission message of a first process from a shared send queue, and send a first packet to the second network device, wherein the first process is any process of a plurality of processes that use the shared send queue and that are run by the first host, and the first packet comprises the RDMA data transmission message and a first identifier corresponding to the first process;
the second network device is configured to: receive the first packet, and send a second packet to the first network device based on the first packet, wherein the second packet comprises the first identifier and a feedback message, and the feedback message indicates a completion status of the RDMA data transmission message; and
the first network device is further configured to: receive the second packet, and notify the first process of the completion status of the RDMA data transmission message based on the first identifier and the feedback message in the second packet.

2. The system according to claim 1, wherein the first packet and the second packet further comprise a second identifier, and the second identifier is used to determine the RDMA data transmission message from a plurality of RDMA data transmission messages of the first process; and
the first network device is specifically configured to notify the first process of the completion status of the RDMA data transmission message based on the first identifier, the feedback message, and the second identifier.

3. The system according to claim 1 or 2, wherein the shared send queue is specifically configured to store work requests from the plurality of processes; and
the first network device is specifically configured to: obtain a first work request from the first process from the shared send queue, and obtain the RDMA data transmission message based on the first work request, wherein the first work request describes the RDMA data transmission message.

4. The system according to any one of claims 1 to 3, wherein the first network device is specifically configured to: determine, from a plurality of completion queues based on the first identifier, a first completion queue corresponding to the first process, and write a work completion element into the first completion queue based on the feedback message, wherein the work completion element describes the completion status of the RDMA data transmission message.

5. A remote direct memory access RDMA data transmission method, comprising:
obtaining, by a first network device, an RDMA data transmission message of a first process from a shared send queue, wherein the first network device is disposed on a first host, and the first process is any one of a plurality of processes that are run by the first host and that use the shared send queue;
sending, by the first network device, a first packet to a second network device, wherein the second network device is disposed on a second host, and the first packet comprises the RDMA data transmission message and a first identifier corresponding to the first process;
receiving, by the first network device, a second packet from the second network device, wherein the second packet comprises the first identifier and a feedback message, and the feedback message indicates a completion status of the RDMA data transmission message; and
notifying, by the first network device, the first process of the completion status of the RDMA data transmission message based on the first identifier and the feedback message in the second packet.

6. The method according to claim 5, wherein the first packet and the second packet further comprise a second identifier, and the second identifier is used to determine the RDMA data transmission message from a plurality of RDMA data transmission messages of the first process; and
the notifying, by the first network device, the first process of a completion status of the RDMA data transmission message based on the first identifier and the feedback message in the second packet comprises:
notifying, by the first network device, the first process of the completion status of the RDMA data transmission message based on the first identifier, the feedback message, and the second identifier.

7. The method according to claim 5 or 6, wherein the shared send queue is specifically configured to store work requests from the plurality of processes; and
the obtaining, by a first network device, an RDMA data transmission message of a first process from a shared send queue comprises:
obtaining, by the first network device, a first work request from the first process from the shared send queue, wherein the first work request describes the RDMA data transmission message; and
obtaining, by the first network device, the RDMA data transmission message based on the first working request.

8. The method according to any one of claims 5 to 7, wherein the notifying, by the first network device, the first process of a completion status of the RDMA data transmission message based on the first identifier and the feedback message in the second packet comprises:
determining, by the first network device from a plurality of completion queues based on the first identifier, a first completion queue corresponding to the first process; and
writing, by the first network device, a work completion element into the first completion queue based on the feedback message, wherein the work completion element is used to notify the first process of the completion status of the RDMA data transmission message.

9. A remote direct memory access RDMA data transmission method, comprising:
receiving, by a second network device, a first packet from a first network device, wherein the first network device is disposed on a first host, the second network device is disposed on a second host, the first packet comprises an RDMA data transmission message of a first process and a first identifier corresponding to the first process, the RDMA data transmission message is obtained by the first network device from a shared send queue, and the first process is any one of a plurality of processes that are run on the first host and that use the shared send queue; and
sending, by the second network device, a second packet to the first network device based on the first packet, wherein the second packet comprises the first identifier and a feedback message, and the first identifier and the feedback message indicate the first network device to notify the first process of a completion status of the RDMA data transmission message.

10. The method according to claim 9, wherein the first packet and the second packet further comprise a second identifier, the second identifier is used to determine the RDMA data transmission message from a plurality of RDMA data transmission messages of the first process, and the first identifier, the feedback message, and the second identifier indicate the first network device to notify the first process of the completion status of the RDMA data transmission message.

11. A network device, comprising:
an obtaining unit, configured to obtain an RDMA data transmission message of a first process from a shared send queue, wherein the network device is disposed on a first host, and the first process is any one of a plurality of processes that are run on the first host and that use the shared send queue;
a sending unit, configured to send a first packet to a second network device, wherein the second network device is disposed on a second host, and the first packet comprises the RDMA data transmission message and a first identifier corresponding to the first process;
a receiving unit, configured to receive a second packet from the second network device, wherein the second packet comprises the first identifier and a feedback message, and the feedback message indicates a completion status of the RDMA data transmission message; and
a completion unit, configured to notify the first process of the completion status of the RDMA data transmission message based on the first identifier and the feedback message in the second packet.

12. The network device according to claim 11, wherein the first packet and the second packet further comprise a second identifier, and the second identifier is used to determine the RDMA data transmission message from a plurality of RDMA data transmission messages of the first process; and
the completion unit is specifically configured to notify the first process of the completion status of the RDMA data transmission message based on the first identifier, the feedback message, and the second identifier.

13. The network device according to claim 11 or 12, wherein the shared send queue is specifically configured to store work requests from the plurality of processes; and
the obtaining unit is specifically configured to:
obtain a first work request from the first process from the shared send queue, wherein the first work request describes the RDMA data transmission message; and
obtain the RDMA data transmission message based on the first working request.

14. The network device according to any one of claims 11 to 13, wherein the completion unit is specifically configured to:
determine, from a plurality of completion queues based on the first identifier, a first completion queue corresponding to the first process; and
write a work completion element into the first completion queue based on the feedback message, wherein the work completion element is used to notify the first process of the completion status of the RDMA data transmission message.

15. A network device, comprising:
a receiving unit, configured to receive a first packet from a first network device, wherein the first network device is disposed on a first host, the network device is disposed on a second host, the first packet comprises an RDMA data transmission message of a first process and a first identifier corresponding to the first process, the RDMA data transmission message is obtained by the first network device from a shared send queue, and the first process is any one of a plurality of processes that are run on the first host and that use the shared send queue; and
a sending unit, configured to send a second packet to the first network device based on the first packet, wherein the second packet comprises the first identifier and a feedback message, and the first identifier and the feedback message indicate the first network device to notify the first process of a completion status of the RDMA data transmission message.

16. The network device according to claim 15, wherein the first packet and the second packet further comprise a second identifier, the second identifier is used to determine the RDMA data transmission message from a plurality of RDMA data transmission messages of the first process, and the first identifier, the feedback message, and the second identifier indicate the first network device to notify the first process of the completion status of the RDMA data transmission message.

17. A network device, comprising a processor and a memory, wherein
the processor is configured to execute instructions stored in the memory, so that the network device performs the method according to any one of claims 5 to 8.

18. A network device, comprising a processor and a memory, wherein
the processor is configured to execute instructions stored in the memory, so that the network device performs the method according to claim 9 or 10.
